# EUROPEAN PATENT APPLICATION

(11) **EP 2 511 857 A2**
(43) Date of publication of application: **17.10.2012**
(21) Application number: 12163035.4
(22) Date of filing: 03.04.2012
(51) Int. Cl.: G06K 19/077, B65D 39/00, B65D 51/24

(54) **Cork for wine bottles and the like**

(30) Priority: 12.04.2011 IT RM20110186
(71) Applicant: Costruzioni Servizi Tecnologici S.r.l., 00144 Roma (IT)
(72) Inventor: Guidotti, Roberto, 00144 Roma (IT)
(74) Representative: Papa, Elisabetta

(57) **Abstract**

A closure cap (1) for bottles of valuable alcoholic beverages, comprising a main body (2) of natural cork and an RFID tag (3) for tracing the cap, which tag stores identification data of the same cap, is integrated in the main body (2) in a central position with respect thereto and arranged orthogonally to the longitudinal axis (L) of the cap, so that the weld spots (312, 321) between chip (31) and antenna (32) of the tag be centrally arranged (Figure 1A).

## Description

### Field of the Invention

The present invention refers to a closure cap for bottles and similar containers - in particular for valuable alcoholic beverages or oils - which cap is made of natural cork and bears, incorporated, a tracing device apt to transmit to a remote reader identification (ID) data of the product.

The invention further refers to a method of tracing a food-and-wine product received in a container, in particular a bottle, closed by the aforesaid cap.

### Background of the Invention

Today, on the market there are both "valuable" caps of natural cork and lower-grade caps made of cork agglomerate, of composite with a low percent of cork, or of plastic material.

Production costs of natural cork caps are decidedly higher than those of agglomerate, composite or plastic. On the other hand, as is well-known to expert purchasers, wines - and alimentary liquids in general - bottled and closed by natural cork caps have the best natural corking possible and continue ageing even after the bottling, obtaining organoleptic features in no way comparable to those associated to other cork types.

In fact, the qualities of natural cork are irreplaceable, particularly in terms of general mechanical features, porosity, lightness of weight, elasticity and impermeability, and of optimal combination of the related parameters. Such properties are associated, among other things, to the fact that each cubic centimetre of cork contains hundreds of aggregated cells with lots of air.

Unfortunately, visually it is not possible to tell the difference between a natural cork cap and other types of cap when the bottle is on a retailer's shelf, also because generally the same cap is covered by a shielding capsule. Moreover, even by removing said capsule before uncorking the bottle, it is very difficult to tell apart a cap of cork agglomerate, or of composite with a low percent of cork, from a "valuable" one of natural cork. Evidently, this fosters the making of counterfeited packages, of low-quality packages, even due to a bottling that uses caps made of materials with properties inferior to those of natural cork, or anyhow of packages of a quality not discernible or knowable .

There are some documents describing caps equipped with a transponder storing information related to the packaged wine or sparkling *(Spumante)* wine.

In particular, WO 2004/052742 describes a cap for wine or sparkling wine bottles bearing a transponder in which product authentication data are stored. For safety reasons, the transponder is contrived and configured so as to be destroyed at bottle opening.

US 2009/0102664 describes a cork for wine bottles incorporating a transponder carrying data related, e.g., to the origin and ageing of the same wine.

A cap similar to the preceding ones is described also in DE 299 19460.

EP 1 857 374 describes a capsule for a wine or liquor bottle, which capsule incorporates a transponder carrying identifying data of the product. Such data are readable by a remote device, e.g. a mobile phone. Moreover, a control system is envisaged, associated to a database for managing bottle production and distribution.

However, the Inventor has noticed that all systems mentioned above do not solve the problem of stresses to which the transponder incorporated in the cap is subjected when the latter is fitted into the neck of the bottle. In particular, in some of such known-art caps the transponder is exposed to a relevant risk of breakage just at said bottling stage, particularly at the connection between antenna and chip. In others of such caps, the overall arrangement is such as not to allow that the transponder be subjected to the stresses associated to cap deformation just at the stage of fitting into the bottle.

Moreover, the Inventors did notice that the known systems envisage a traceability/identification of the product meant as beverage received into the container, yet in no extent did they pose the problem of cap identification/traceability, which instead - as highlighted above - is as important to the ends of a guarantee of the quality of the overall product.

### Summary of the Invention

The technical problem set and solved by the present invention is to provide a closure cap for bottles and similar containers allowing to overcome the drawbacks mentioned above with reference to the known art.

Such a problem is solved by a tracing device according to claim 1, by a kit according to claim 10 and by a closure cap according to claim 11.

The invention further provides a method of tracing food-and-wine products according to claim 25.

Preferred features of the present invention are the subject matter of the dependent claims.

The invention solves the above-mentioned technical problem, as it provides a cap that is effectively traceable/identifiable and has a configuration suitable for minimizing the risks that the tracing means incorporated therein breaks during a cap deformation associated to its fitting into the neck of a bottle.

In particular, the presence in the cap of an electronic tracing means, in particular a so-called "tag" emitting in radiofrequency, allows to univocally identify a natural cork cap without having to open the bottle, or other container, and with certainty of originality of the product utilizing it.

Moreover, the arrangement of the connection between chip and antenna of the tracing device centrally in the cap body, at a longitudinal axis thereof, causes such connection to be not affected in the least, or be minimally concerned, by the cap deformation occurring at the stage of fitting it into the bottle. Thus, the above-mentioned breakage risk is nullified or reduced to a minimum.

By individually analysing the advantages provided by the invention and by the preferred embodiments thereof for all components of the production/distribution chain, it may be noticed that:
- the cap producer can more easily manage its internal production (in particular in terms of storehouses, shipping and production controls), by utilizing the tracing device for identifying the same caps, with the possibility of reading also from the inside of closed packages (e.g. wrappings);
- likewise, the producer of bottles or other containers utilizing this type of cap can in turn manage its productions (also here, in particular, storehouses, shipping and production controls) identifying the containers by means of said tracing device;
- supermarkets or retailers in general can utilize the tracing device for selling operations, in particular also for the definition of the purchase value;
- the purchaser can have the certainty of having purchased an original product, with the possibility that the tracing device provides information data also about production methods, origin of raw materials, ageing, etc., not merely of the cap but of the beverage as well.

In connection with the latter of the above-disclosed advantages, preferably the tracing device provides an information signal carrying one or more of the aforesaid contents.

According to a first variant embodiment, such contents may be directly associated to the same signal, requiring only a decoding by a reader. The information content provided by the tracing device may however be also input to a data bank and made available to an intermediate or end user of the distribution chain, allowing cross-checks.

According to a second variant, the signal may provide merely a code, however sent to a reader. Such a code may then be provided to the aforesaid suitable data bank, in which complete information contents are associated thereto.

Always in connection with the latter of the above-disclosed advantages, and with a view to allow access to information to an end user, preferably the tracing device is apt to interface with a reader, like, e.g. a mobile phone or a computer, also a portable one.

Other advantages, features and the operation steps of the present invention will be made evident in the following detailed description of some embodiments thereof, given by way of example and not for limitative purposes.

### Brief description of the figures

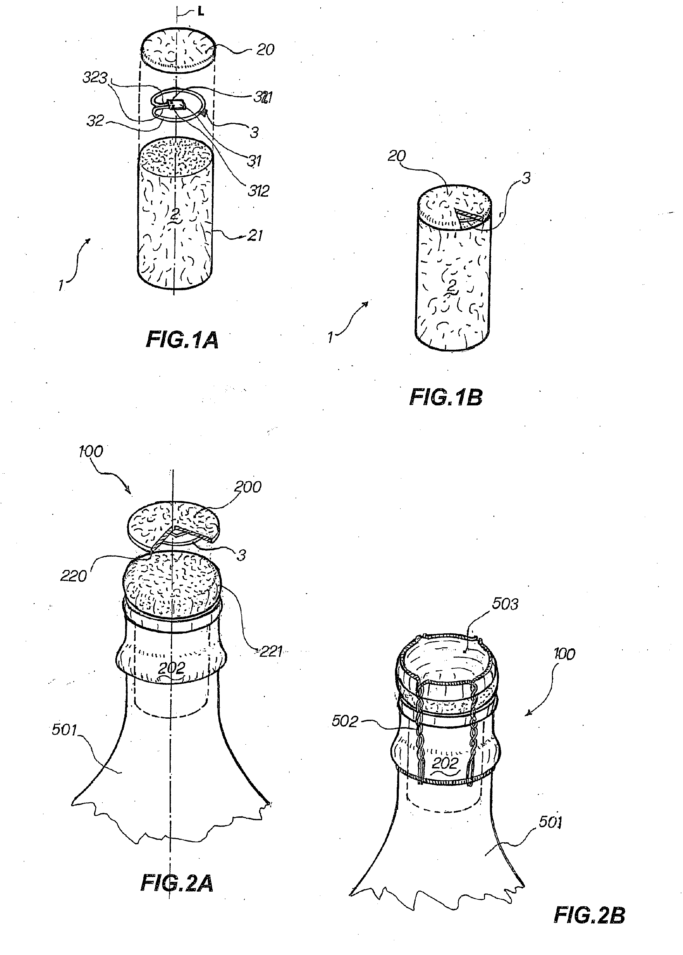

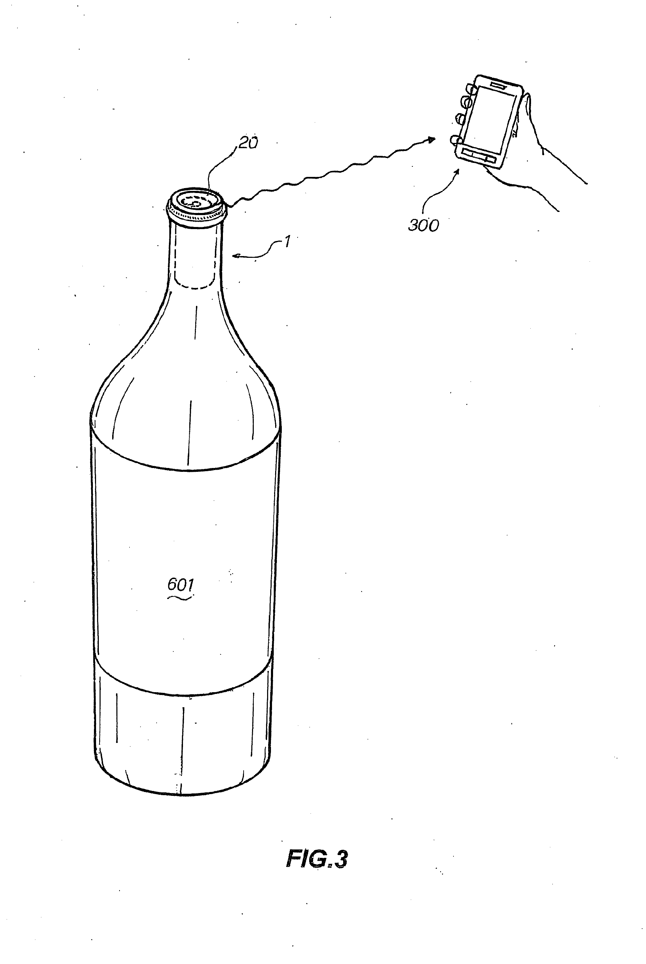

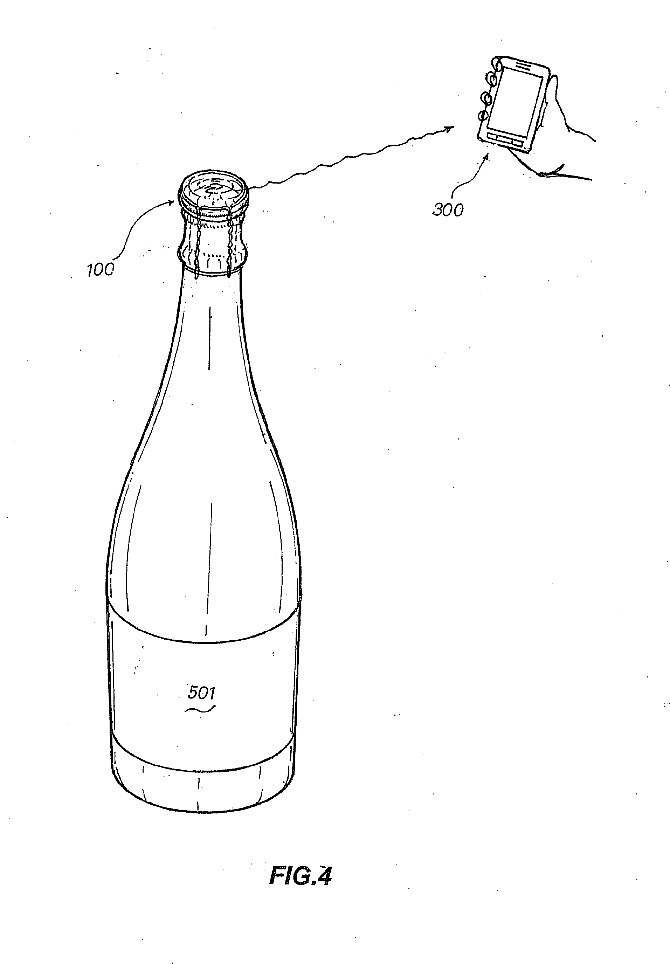

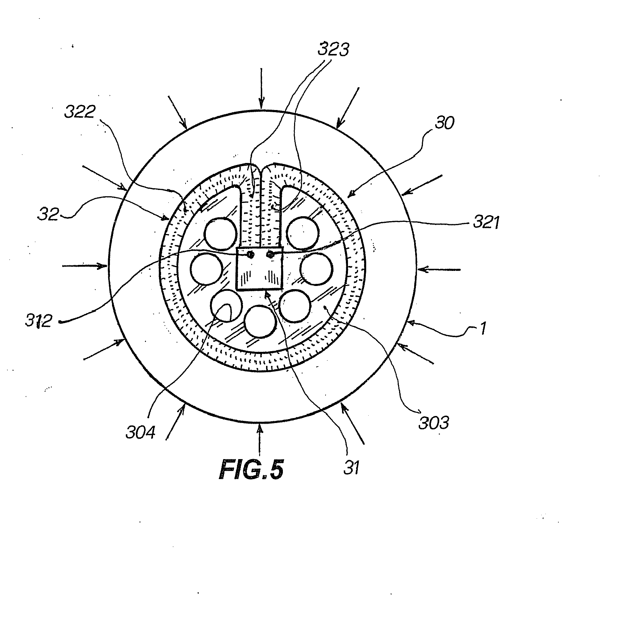

Reference will be made to the figures of the annexed drawings, wherein:
■ Figures 1A and 1B refer to a preferred embodiment of a closure cap according to the present invention, showing respective perspective views sketching a possible construction sequence thereof;
■ Figures 2A and 2B refer to a preferred embodiment of a corking kit according to the invention, showing a perspective view thereof respectively during and after application on a lowered cap;
■ Figure 3 shows a perspective view of the closure cap of Figure 1B, applied on a wine bottle and during use of a corresponding reading device by a user;
■ Figure 4 shows a perspective view of the kit of Figure 2B, applied on a sparkling wine *(Spumante)* bottle and during use of a corresponding reading device by a user; and
■ Figure 5 refers to a preferred embodiment of a tracing device according to the present invention for use in a closure cap, showing a top plan view thereof.

### Detailed description of preferred embodiments

Referring initially to Figures 1A and 1B, a closure cap for bottles and similar containers according to a preferred embodiment of the invention is generally denoted by 1.

The cap 1 of the present example is contrived for closing bottles containing valuable alcoholic beverages, in particular wines or *(Spumante)* sparkling wines.

The cap 1 comprises a main body 2 completely made of natural cork and apt to be at least partially fitted into a bottle for closing it. Alike in the known caps, said main body 2 may comprise a primary member of natural cork and a pair of discs or washers, them also of natural cork, applied thereon.

The main body 2 is shaped according to the known contour of a wine cap, having a substantially cylindrical shape, elongated along an axis of longitudinal symmetry or direction of main development L. The main body 2 has a substantially constant diameter for the entire extension along the longitudinal axis L and is intended for being integrally or nearly integrally fitted into a neck of a bottle.

According to the invention, the cap 1 comprises an electronic tracing device 3 fixed to the main body 2, and in particular integrated thereinside. The tracing device 3 develops along a substantially planar configuration.

The tracing device 3 is formed by a chip 31 apt to store Identification data of the cap 1 and of the product packaged therewith, and an antenna 32 apt to transmit said data to a remote reader.

In the present example, the antenna 32 has a substantially wire-shaped configuration and develops along a substantially circular path. In particular, the antenna 32 has just a circular portion 322 extending almost for an entire circumference, and two end segments 323 side-by-side, preferably rectilinear and extending substantially along respective radiuses of said circumference.

The connection between the chip 31 and the antenna 32 is made at or near to the centre of the cap 1, i.e. at or near to axis L. Therefore, also the chip 31 is arranged at or near to a central portion of the cap 1.

Preferably, such connection between chip 31 and antenna 32 is made by welding, and preferably comprises two weld spots 312, 321 performed at the ends of the segments 323 of the antenna.

In the present example, the tracing device 3 is made in the form of an RFID tag or transponder, in particular of passive type. As is well-known to a technician in the field, the RFID tag is substantially a microchip, in the present instance passive and therefore without power source, which is excited by radiofrequency (RF) emissions of a reader placed near the tag itself. In the present example, therefore, the antenna 32 also receives power supply from the reader.

As mentioned, the RFID tag is apt to transmit to the above-mentioned reader an identification signal, in radiofrequency, of the cap 1. In the present example such signal is preferably in UHF ("*Ultra-High Frequency*") or HF ("*High-Frequency*")*.*

The tracing device 3 is positioned into the main body 2 in an arrangement substantially orthogonal to the longitudinal axis L.

In the present example, as shown by the sequence of Figures 1A and 1B, the locking of the tracing device 3 with the main body 2 is obtained by adhering the same device on a prevalent bottom portion 21 of the body 2 and then overlapping thereto another - top - portion of the main body 2. The latter portion consists, in particular, in a cover member 20 in the form of a disc, or washer, of natural cork of the same shape in section and size of the aforesaid prevalent portion 21 of main body 2. Such a disc 20 may be of the same type already present in known caps, as mentioned above.

The locking of the device 3 and the cover member 20 on the remainder 21 of the main body 2 may be obtained by glues of conventional type in the field.

Figure 3 shows the cap 1 applied on a wine bottle 601. Therein, the tracing device 3 has been depicted as visible in transparency.

Therefore, the tracing device 3 is found into the neck 601 of the bottle or in the immediate vicinity of the mouth of the latter.

The tracing device 3 may be induced to the emission of a signal carrying the Identification data stored in the chip 31 by a reader, which in the present example is integrated in the functionalities of a mobile phone 300 or also of a portable computer.

As mentioned above, preferably the device 3 provides ID information of the cap and the product to which is associated, and possibly also information related to production methods, raw material origin, ageing, etc.

Moreover, upon reading the signal provided by the device 3, on the display of the phone 300 the information content might be displayed, in particular in the form of a confirmation that it is a cap of natural cork.

Preferably, to the closure cap 1 a data bank is associated, selectively accessible for a cross-check of the information content provided by the tracing device 3 and/or for association of complete or readable information contents to a code provided by said device.

In a preferred variant embodiment, a password-protected storage of an information code or of specific data of the cap and/or of the product is provided in chip 31. Such protected storage may be associated to the non-protected storage of a further code and/or of further data.

In that case, the user-which has previously "enrolled", i.e. registered, in the management system of the data bank by known authentication procedures - detects with the reader an ID code or other data stored in the chip in an unprotected mode, transmits it to the data bank and, upon recognition, from the latter receives the password for accessing to the protected data area.

Such data management modes allow a further certainty of authenticity, preventing the risk of data and/or unprotected code duplications on counterfeited products.

Variant embodiments may envisage the reader to be of stationary type, e.g. a reading station installed at the points of sale.

Moreover, in a different application, reading of information content might (also) be obtained during in-line automatic machining in the production stage.

Figures 2A and 2B show an embodiment of a corking kit, generally denoted by 100, which will be described solely in connection with the aspects differentiating it from the first embodiment and related variants illustrated above.

The kit 100 is formed by a tracing device, analogous to that described above in connection with Figures 1A and 1B and in this case as well denoted by 3, and by a cover member, preferably of natural cork, similar to or alike that of the above-described cap 1 and in this instance denoted by 200. Cover member 200 and tracing device 3 may be provided already fixed the one to the other, in particular with the member 3 adhered on a bottom face 220 of the cover member 200.

The kit 100 of the present embodiment is intended for use with *Spumante* or Champagne bottles 501, and preferably comprises also a wire cage 502 for completing the sealing of such a bottle.

In the present example, the kit 100 is intended to be applied on a cap body 202 already fitted into the bottle 501. As shown in Figure 2A and 2B, the cap body 202 includes a head 221 of greater diameter, resulting from deformation of the cap during the fitting into the neck of the bottle 501.

The tracing device 3 and the cover member 200 are then applied after bottle corking, preferably in a same bottling line and on the cap body 202. The latter is preferably lowered, so that the resulting end cap after application of the device 3 and the cover 200 is similar to one-piece caps both in shape and size.

In the present example, the cover member 200 may also be of a material different from natural cork.

In Figure 2B, by way of example the end package has been depicted as inclusive also of capsule 503.

In the case of sparkling wine, the metal wire cage 502 can act as further antenna and make the device 3 readable at greater distances.

Referring now to Figure 5, a preferred embodiment of a tracing device suitable to be applied both with the cap 1 of Figures 1A, 1B and 3 and with the kit of Figures 2A, 2B and 4 will be described. By way of example, in Figure 5 the contour of the cap 1 has been depicted, and the stresses undergone by the same cap at the stage of fitting into the neck of the bottle have been exemplified by arrows.

Such a tracing device, generally denoted by 30, comprises an antenna and a chip analogous to those already described, and also here denoted by 31 and 32. Chip 31 and antenna 32 are applied on a support 303, preferably having a substantially circular shape and preferably made of plastic material.

The support 303 bears a plurality of stress relief holes 304, arranged externally with respect to the connection zone between chip 31 and antenna 32. In particular, in the present example the holes 304 are obtained on a same circumference or circumference segment.

In the application to the cap 1 of Figure 1B, the holes 304 enable a direct adhesion of the top cover member 20 to the bottom portion 21 of cap, with the entailed stiffening of the central zone of the cap 1, thereby protecting the tracing device in the zone of the welds between antenna and chip.

In the application to the kit 100 of Figure 2A, the holes 304 make the tracing device non-removable, save for the breakage of contacts between chip and antenna by a forcing between the central and peripheral zones.

The antenna of the above-described tracing devices 3, 30 may have a circular, square, rectangular or generally polygonal cross section, according to the specific needs.

Hereinafter, it is illustrated in greater detail how the configuration proposed by the invention, particularly in the cap of Figure 1A incorporating the tracing device 3 or 30, is suitable to prevent that the performances of said tracing device be affected by deformation, at the bottling stage, of the main body of natural cork of the cap.

In the application to bottling and storage of wine and similar alcoholic beverages, the fitting of the cap into the neck of the reference bottle is a delicate operation, as it compresses the material of the cap and therefore, when not correctly performed or when the material is not homogeneous, can cause damages which make the cap itself useless. In fact, cap homogeneity is fundamental for correctly distributing the pressure exerted in a limited area on all the mass of the cap itself. This means that the use of composite materials, or anyhow of inserts of any nature - the latter particularly when arranged parallelly to the longitudinal axis of the cap - is highly inadvisable, as limiting the thickness of homogeneous material subjected to bottling pressure. By increasing the compressive force, as a consequence of the reduced resisting thickness, also the risk of damaging the cap increases.

As mentioned above, natural cork exhibits mechanical and homogeneity features optimal to the ends of such bottling operations, features that are precisely best exploited in the present invention.

In bottling, the main body of cork undergoes deformation, decreasing from the external diameter to gradually decreasing diameters, until reaching zero at a few millimetres from the longitudinal axis. Such a deformation, thanks to the features of natural cork, becomes scarcely influent at about 7 mm (i.e., about 3.5 mm on the radius) from the outer edge of the cap. In other words, to diameters nearer to the cap axis there correspond deformations ever smaller, though present, which already at diameters smaller than about 7 mm with respect to the external diameter may be deemed minimal.

This feature inherent in natural cork is allowed by the fact that all the mass of the cork deforms, even though in a decreasing manner from the outside to the inside. When rigid parts are fitted into the structure - e.g. rigid tracing devices arranged parallelly to the longitudinal axis of the cap - the way to react of the cap itself is completely modified, and the cork external to the insert is forced to undergo the total deformation needed for the fitting, with consequent possible breakages or cracks. Suffice it to think to caps for sparkling wine *(Spumante)* bottles, undergoing a remarkable diameter decrease in order to be fitted and bear the internal pressure of this type of liquid.

Valuable caps normally have a diameter ranging from 22 to 26 millimetres for corkings flush with the mouth, and from 26 to 32 mm for those intended for sparkling wines and *Spumante.* Therefore, a tracing device having a diameter no greater than 16 mm will undergo minimum deformation at the time of fitting, such, as mentioned above, as not to compromise its functionality.

Preferably, the overall encumbrance of the tracing device 3 or 30 provides a diameter equal to or lower than about 15 mm, and preferably about 12 mm, and a thickness equal to or lower than about 0.2 mm.

In case of a tracing device with a contour other than the circular one, the aforesaid preferred values refer to a maximum cross dimension.

The relief holes 304 of the device 30 allow to further and drastically reduce the risk that pressure exerted by the equipment for fitting the caps into the neck of the bottle, though propagated in a decreasing manner with the decrease of the diameter, may create a deformation dangerous for the welds between antenna and chip.

It will be appreciated that all of the above-described manufacturing modes of the cap 1 and the kit 100 prevent any punching of the main body 2, 202 of natural cork, preserving its mechanical features, in particular in terms of elasticity, fundamental above all in the bottling and closing stage.

It will also be appreciated that all of the above-described manufacturing modes of the cap 1 and the kit 100 envisage the tracing device to have however a certain degree of elastic deformability, particularly useful in the bottling stage, when the entire cap undergoes the deformation described in detail above.

Moreover, it will be appreciated that, in the bottle-opening stage, any corkscrew could break the device 3, 30. Even if the latter were not to be destroyed at the opening stage, the safety system associated to the cap 1 or to the kit 100 would remain perfectly valid, as the cancellation of the code stored in the device 3, 30 could however occur in the above-mentioned data bank, making said code non-reusable, and therefore making a product exhibiting it non-saleable.

It will also be appreciated that the cap 1 and the kit 100 enable an inserting of the tracing device 3, 30 performed directly and exclusively by the cap producer in the manufacturing stage of the same. In practice, in order to benefit from the results of the invention, wineshops, or better, cap users, do not need to undertake any production, management or distribution procedure different from what has been done to date.

In particular, no machining subsequent to or preceding the corking stage is necessary.

Moreover, it will be understood that the invention allows a global tracing of a food-and-wine product, starting with the tracing of the cap and proceeding with that of the associated beverage.

Variant embodiments may envisage that the cap, the tracing device and/or the kit of the invention be associated to a container for food-and-wine products different from the above-mentioned sparkling wine *(Spumante)* or wine bottles, in particular a container of other alcoholic beverage or of alimentary oil.

The present invention has been hereto described with reference to preferred embodiments thereof. It is understood that other embodiments might exist, all falling within the concept of the same invention, as defined by the protective scope of the claims hereinafter.

## Claims

1. A tracing device (30),
apt to be arranged into a main body (2; 202) of a closure cap (1) for bottles and similar containers, particularly suitable for use with bottles of valuable alcoholic beverages,
which tracing device (30) comprises:
- a chip (31), apt to store identification data of the cap and/or of the product;
- an antenna (32), preferably of a substantially wire-shaped configuration, connected to said chip (31) and apt to transmit said identification data to a reader (300); and
- a support (303) on which said chip (31) and said antenna (32) are applied, which support (303) bears a plurality of stress relief holes (304).

2. The tracing device (30) according to claim 1, wherein said connection between chip (31) and antenna (32) is made at or near to a centre of said support (303).

3. The tracing device (30) according to claim 1 or 2, wherein said chip (31) is arranged at or near to a centre of said support (303).

4. The tracing device (30) according to any of the preceding claims, wherein said connection between chip (31) and antenna (32) is made by welding, and preferably comprises one or more weld spots (312, 321) performed at end segments (323) of said antenna (32).

5. The tracing device (30) according to any of the preceding claims, wherein said support (303) has a substantially circular shape, with said relief holes (304) arranged on a same circumference or circumference segment.

6. The tracing device (30) according to any of the preceding claims, wherein said support (303) is partially or completely made of plastic material.

7. The tracing device (30) according to any of the preceding claims, having a maximal cross dimension, preferably a diameter, equal to or lower than about 15 mm, and even more preferably equal to about 12 mm.

8. The tracing device (30) according to any of the preceding claims, which has a substantially planar configuration and is apt to be arranged transversally to a longitudinal axis (L) of the cap (1).

9. The tracing device (30) according to any of the preceding claims, wherein said antenna (32) develops substantially along an arc of circumference (322) and has two end segments (323) arranged side-by-side, extending substantially along respective radiuses of said circumference.

10. A kit (100) for the corking of sparkling wine bottles or similar containers, comprising:
■ a cover member (200), preferably of natural cork; and
- a tracing device (30), preferably made according to any of the preceding claims and fixed or fixable to said cover member (200),
which kit (100) is provided separately of a cap body (202) of natural cork
and wherein said cover member (200) and tracing device (30) are fixable on said cap body (202) so that said tracing device (30) be interposed between cover member (200) and cap body (202).

11. A closure cap for bottles and similar containers (1), particularly suitable for use with bottles of valuable alcoholic beverages, which cap (1) comprises:
- a main body (2; 202) which develops along a longitudinal axis (L) and is apt to be inserted into a container, in particular a bottle, for closing it, which main body (2; 202) is completely made of natural cork; and
- a tracing device (3; 30) for the cap, apt to transmit to a reader Identification data of the cap and arranged into said main body (2; 202), which tracing device (3; 30) has a substantially planar configuration, is arranged substantially orthogonal to said longitudinal axis (L) of said main body (2; 202) and comprises a chip (31) apt to store said identification data and an antenna (32) connected to said chip (31) for performing said identification data transmission,
wherein such connection between chip (31) and antenna (32) is arranged in a central portion of said main body (2; 202), at or near to said longitudinal axis (L).

12. The cap (1) according to claim 11, wherein said main body (2; 202) has a shape substantially elongated along said longitudinal axis (L), which is preferably an axis of symmetry or direction of main development.

13. The cap (1) according to claim 11 or 12, wherein said main body (2; 202) has a substantially cylindrical geometry.

14. The cap (1) according to any of claims 11 to 13, wherein said tracing device (3; 30) is arranged into said main body (2; 202) at a top portion thereof.

15. The cap (1) according to any of claims 11 to 14, wherein said tracing device (3; 30) is protected from the external environment by a thin cover member (20) made of natural cork.

16. The cap (1) according to any of claims 11 to 15, wherein said tracing device (3; 30) is an RFID tag or a transponder.

17. The cap (1) according to any of claims 11 to 16, wherein said connection between chip (31) and antenna (32) is made by welding and preferably comprises one or more weld spots (312, 321) performed at end segments (323) of said antenna (32).

18. The cap (1) according to any of claims 11 to 17, wherein said chip (31) of said tracing device (3; 30) carries stored ID data of the cap itself.

19. The cap (1) according to any of claims 11 to 18, wherein said tracing device (3; 30) has a maximum cross dimension, preferably a diameter, equal to or lower than about 15 mm.

20. The cap (1) according to any of claims 11 to 19, wherein said tracing device (30) is made according to any of claims 1 to 9.

21. The cap (1) according to the preceding claim, wherein said tracing device (30) is fixed to said main body (2; 202) at said relief holes (304), preferably by an adhesive.

22. A package for a food-and-wine product, comprising a container (501) for receiving the product, preferably substantially in the form of a bottle, and a cap (1) according to any of claims 11 to 21 placed to close said receiving container (501).

23. The package according to the preceding claim, further comprising shielding means (502) for shielding said cap (1).

24. A food-and-wine product (500), comprising a package according to claim 22 or 23 and a food product received therein, preferably an alcoholic beverage or an alimentary oil.

25. A method of tracing a cap of a food-and-wine product, in particular a valuable wine or oil, envisaging the use of closure caps (1) according to any of claims 11 to 21, which method further envisages the use of a remote data bank storing said Identification data, and wherein preferably it is provided, in said chip (31), a password-protected data storage, said password being provided by said data bank, preferably upon asker recognition.

26. A system of tracing a cap of a food-and-wine product, in particular a valuable wine or oil, comprising:
■ one or a plurality of closure caps (1) according to any one of the claims 11 to 21; and
■ a remote data bank storing said and/or further Identification data.
